# EUROPEAN PATENT APPLICATION

(11) **EP 4 117 186 A1**
(43) Date of publication of application: **11.01.2023**
(21) Application number: 21764605.8
(22) Date of filing: 02.03.2021
(51) Int. Cl.: H04B 1/38, H04B 7/00

(54) **WIRELESS COMMUNICATION DEVICE, WIRELESS COMMUNICATION CONFIGURATION PROGRAM AND WIRELESS COMMUNICATION CONFIGURATION METHOD**

(30) Priority: 04.03.2020 JP 2020037094
(71) Applicant: KYOCERA Document Solutions Inc., Osaka-shi, Osaka, 540-8585 (JP)
(72) Inventor: AIBA Masaaki, Osaka-shi Osaka 540-8585 (JP); OYASATO Tomoki, Osaka-shi Osaka 540-8585 (JP); WATANABE Takehiro, Osaka-shi Osaka 540-8585 (JP)
(74) Representative: Viering, Jentschura & Partner mbB Patent- und Rechtsanwälte
(86) International application number: PCT/JP2021/007830
(87) International publication number: WO 2021/177269

(57) **Abstract**

To appropriately configure frequency for the wireless network communication module. A wireless communication device includes: a wireless network communication module; a main controller board including a main controller circuit and a non-volatile main storage device having a main database storing main position information to specify frequency for the wireless network communication module; and an engine controller board physically independent of the main controller board and including an engine controller circuit and a non-volatile engine storage device having an engine database storing engine position information to specify frequency for the wireless network communication module, wherein if the main position information and the engine position information differ, the main controller circuit configures frequency specified by the engine position information for the wireless network communication module, and overwrites the main position information stored in the main database with the engine position information.

## Description

### TECHNICAL FIELD

The present disclosure relates to a wireless communication device having a plurality of physically independent controller boards. Furthermore, the present disclosure relates to a wireless communication configuration program and a wireless communication configuration method to be executed by a wireless communication device.

### BACKGROUND ART

It is necessary for a wireless network communication module to be configured by frequency corresponding to the country where a wireless communication device is installed. This is because a frequency band used by the wireless network communication module differs depending on the Radio Law of each country.

### CITATION LIST

### Patent Literature

PTL 1: Japanese Patent No. 6406451

### SUMMARY OF THE INVENTION

### PROBLEMS TO BE SOLVED BY THE INVENTION

It is desirable to properly configure frequency for the wireless network communication module after parts of the wireless communication device are replaced due to failure or the like.

### MEANS FOR SOLVING THE PROBLEM

A wireless communication device according to one aspect of the present disclosure includes: a wireless network communication module; a main controller board including a main controller circuit and a non-volatile main storage device that has a main database capable of storing main position information to specify frequency to be configured for the wireless network communication module; and an engine controller board that is physically independent of the main controller board and includes an engine controller circuit and a non-volatile engine storage device that has an engine database capable of storing engine position information to specify frequency to be configured for the wireless network communication module, wherein if the main position information read from the main database and the engine position information read from the engine database differ, the main controller circuit configures frequency specified by the engine position information for the wireless network communication module, and overwrites the main position information stored in the main database with the engine position information.

In a wireless communication device which includes: a wireless network communication module; a main controller board including a main controller circuit and a non-volatile main storage device that has a main database capable of storing main position information to specify frequency to be configured for the wireless network communication module; and an engine controller board that is physically independent of the main controller board and includes an engine controller circuit and a non-volatile engine storage device that has an engine database capable of storing engine position information to specify frequency to be configured for the wireless network communication module, a non-transitory computer-readable storage medium according to one aspect of the present disclosure, which stores a wireless communication configuration program, causes the main controller circuit to operate to configure frequency specified by the engine position information for the wireless network communication module, and to overwrite the main position information stored in the main database with the engine position information if the main position information read from the main database and the engine position information read from the engine database differ.

In a wireless communication device which includes: a wireless network communication module; a main controller board including a main controller circuit and a non-volatile main storage device that has a main database capable of storing main position information to specify frequency to be configured for the wireless network communication module; and an engine controller board that is physically independent of the main controller board and includes an engine controller circuit and a non-volatile engine storage device that has an engine database capable of storing engine position information to specify frequency to be configured for the wireless network communication module, a wireless communication configuration method according to one aspect of the present disclosure includes: if the main position information read from the main database and the engine position information read from the engine database differ, by the main controller circuit, configuring frequency specified by the engine position information for the wireless network communication module; and overwriting the main position information stored in the main database with the engine position information.

### EFFECT OF THE INVENTION

It is possible to achieve that the frequency can be properly configured in the wireless network communication module after the parts of the wireless communication device has been replaced due to failure or the like.

The effects described here are not necessarily limited thereto, but may be any of the effects described in this disclosure.

### BRIEF DESCRIPTION OF THE DRAWINGS

FIG. 1 shows constitution of an image forming device according to an embodiment of the present disclosure.
FIG. 2 shows structure of a main database.
FIG. 3 shows structure of an engine database.
FIG. 4 shows structure of a frequency database.
FIG. 5 shows an operation flow of a main controller circuit.
FIG. 6 shows an operation of the main controller circuit.

### MODE FOR CARRYING OUT THE INVENTION

Now, an embodiment of the present disclosure is described below with reference to the drawings. As an example of a wireless communication device, an image forming device (MFP: Multifunction Peripheral) is described.

### 1. Constitution of Image forming device

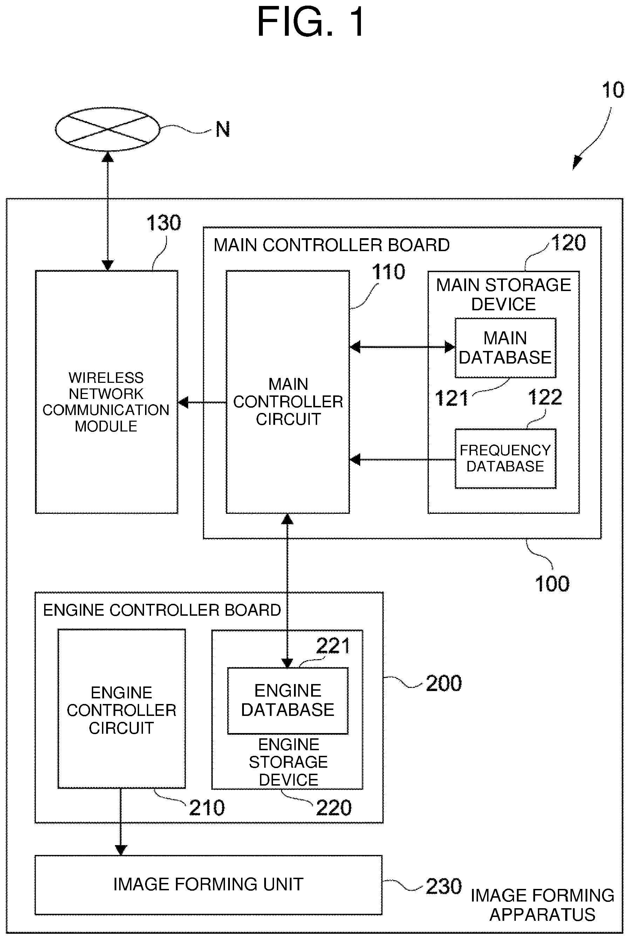

FIG. 1 shows constitution of the image forming device according to an embodiment of the present disclosure.

The image forming device 10 includes main controller board 100, engine controller board 200, wireless network communication module 130, and image forming unit 230.

The main controller board 100 and the engine controller board 200 are physically independent of each other. In other words, the main controller board 100 can be replaced with a new main controller board 100 regardless of the engine controller board 200. The engine controller board 200 can be replaced with a new engine controller board 200 regardless of the main controller board 100.

The wireless network communication module 130 is a module to wirelessly connect to a network N such as the Internet.

The main controller board 100 has main controller circuit 110 and main storage device 120.

The main controller circuit 110 is composed of CPU (Central Processing Unit), RAM (Random Access Memory), ROM (Read Only Memory), and dedicated hardware circuits, etc., and controls the overall operation of the image forming device 10. The main controller circuit 110 controls the wireless network communication module 130.

The main storage device 120 is a non-volatile on-chip memory mounted on the main controller board 100. The main storage device 120 has main database 121 and frequency database 122.

The image forming unit 230 includes paper feeding unit, toner container, developing unit including a drum, optical unit, fusing unit, etc.

The engine controller board 200 has engine controller circuit 210 and engine storage device 220.

The engine controller circuit 210 is composed of CPU, RAM, ROM, and dedicated hardware circuit, etc., and controls an image forming unit 230.

The engine storage device 220 is a non-volatile on-chip memory mounted on the engine controller board 200. The engine storage device 220 has an engine database 221.

### 2. Structure of Main Database

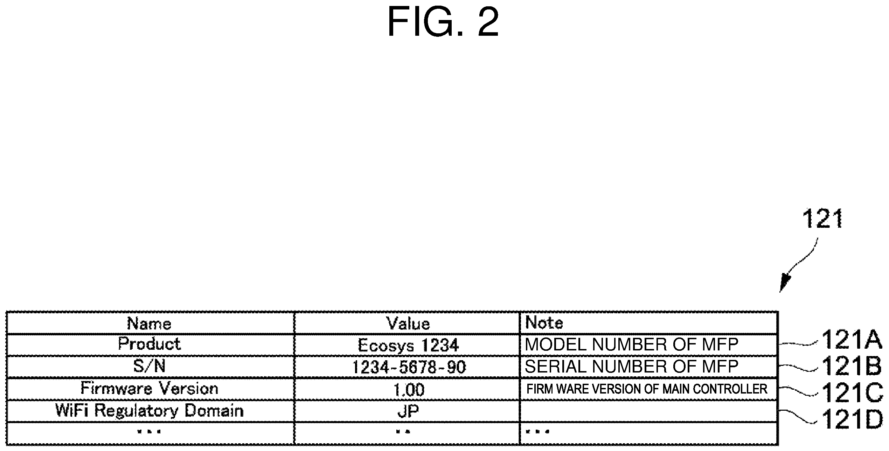

FIG. 2 shows the structure of the main database.

The main database 121 can store a model number of the image forming device 10 (121A), a serial number of the image forming device 10 (121B), a firmware version of the main controller circuit 110 (121C), and main position information 121D.

The main position information 121D is position information to specify frequency to be configured for the wireless network communication module 130. For example, the main position information 121D is regional information indicating the region including the country where the image forming device 10 is installed (e.g. Regulatory Domain) or a country code of the country where the image forming device 10 is installed.

The main position information 121D is written when the image forming device 10 is shipped. However, if the main controller board 100 is replaced due to failure or the like after the image forming device 10 is shipped, there is the case where the main database 121 of the main storage device 120 of the replaced new main controller board 100 does not store the main position information 121D (it is blank).

### 3. Structure of Engine Database

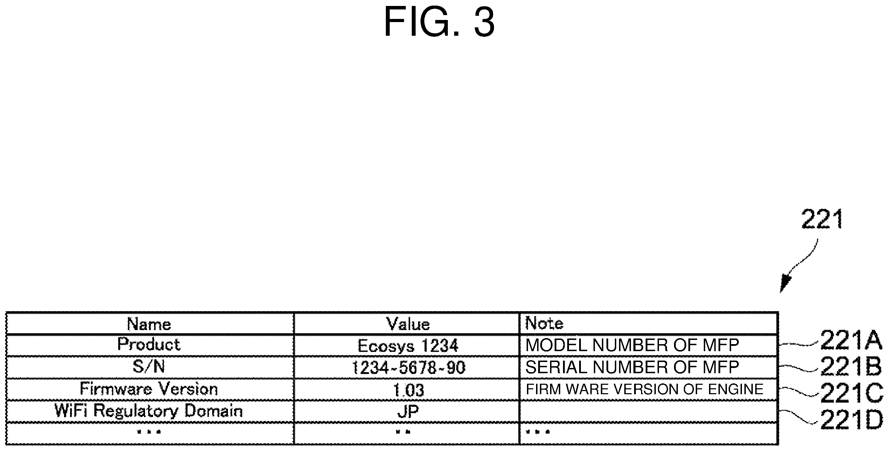

FIG. 3 shows the structure of the engine database.

The engine database 221 can store a model number of the image forming device 10 (221A), a serial number of the image forming device 10 (221B), a firmware version of the engine controller circuit 210 (221C), and engine position information 221D.

The engine position information 221D is position information to specify frequency to be configured for the wireless network communication module 130. For example, the engine position information 221D is regional information indicating the region including the country where the image forming device 10 is installed (e.g. Regulatory Domain) or a country code of the country where the image forming device 10 is installed.

The engine position information 221D is written when the image forming device 10 is shipped. However, if the engine controller board 200 is replaced due to failure or the like after the image forming device 10 is shipped, there is the case where the engine database 221 of the engine storage device 220 of the replaced new engine controller board 200 does not store the engine position information 221D (it is blank).

At the time of shipment, the main position information 121D in the main database 121 and the engine position information 221D in the engine database 221 are identical.

### 4. Structure of Frequency Database

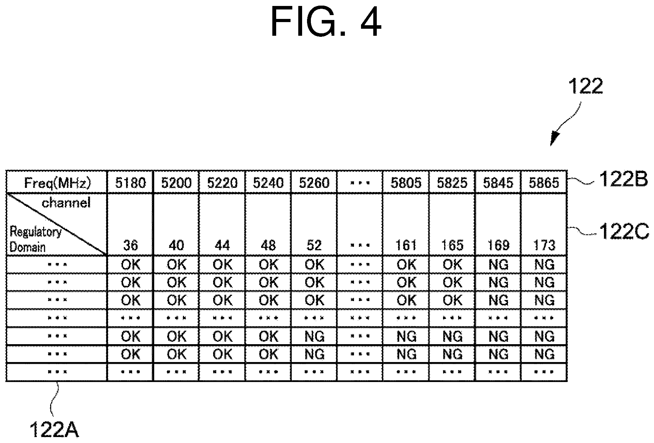

FIG. 4 shows the structure of the frequency database.

The frequency database 122 correlates regional information 122A with frequencies 122B and channels 122C which are specified by the region (or country) specified by regional information 122A (i.e., use in the region or country is permitted). For example, regional information 122A is regional information indicating a region (e.g., Regulatory Domain) or a country code.

### 5. Operation Flow of Main Controller Circuit

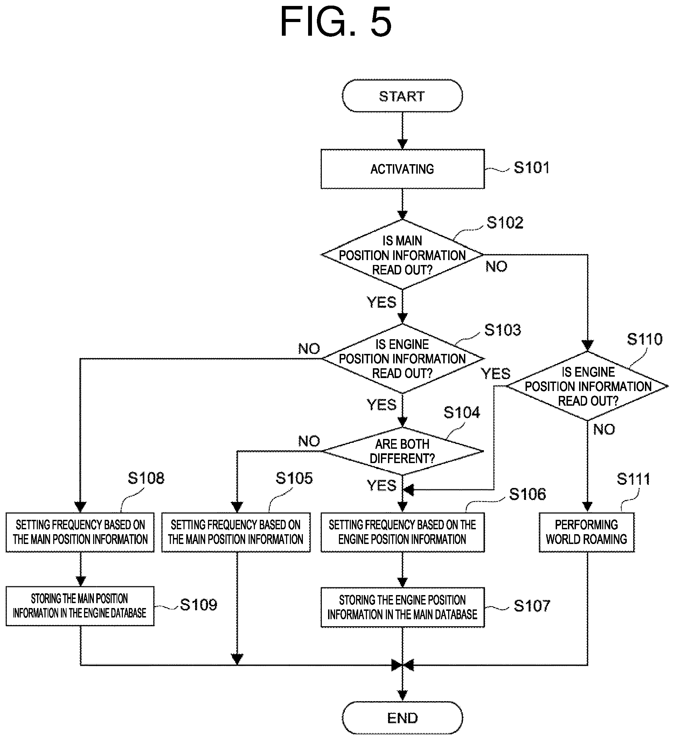

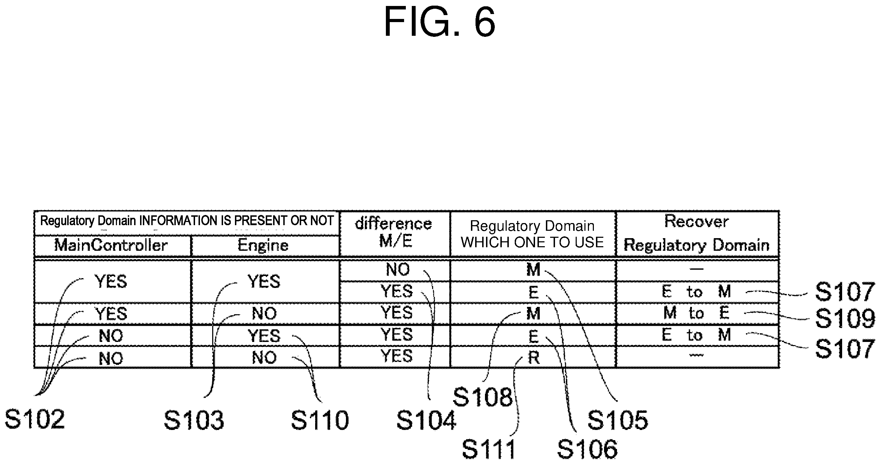

FIG. 5 shows an operation flow of the main controller circuit. FIG. 6 schematically shows the operation of the main controller circuit.

Triggered by that the image forming device 10 starts (step S101), the main controller circuit 110 attempts to read the main position information 121D from the main database 121, and then attempts to read the engine position information 221D from the engine database 221.

The main controller circuit 110 reads main position information 121D from the main database 121 (step S102, YES), and then reads engine position information 221D from the engine database 221 (step S103, YES). The main controller circuit 110 compares the main position information 121D with the engine position information 221D (step S104).

If the main position information 121D and the engine position information 221D are identical (step S104, NO), the main controller circuit 110 configures frequency specified by the main position information 121D (which is identical to the engine position information 221D) for the wireless network communication module 130 based on the frequency database 122 (step S105). As mentioned above, at the time of shipment, since the main position information 121D and the engine position information 221D are identical, this flow is taken if there is no failure, parts replacement or the like.

If the main position information 121D and the engine position information 221D are different (step S104, YES), the main controller circuit 110 configures frequency specified by the engine position information 221D for the wireless network communication module 130 based on the frequency database 122 (step S106). The main controller circuit 110 restores (recoveries) the main position information 121D stored in the main database 121 by overwriting the main position information 121D stored in the main database 121 with the engine position information 221D read from the engine database 221 (step S107).

If the main position information 121D and the engine position information 221D are different (Step S104, YES), the engine position information 221D is prioritized (steps S106, S107) since it is considered that it is highly probable that the main controller board 100 more likely to fail or to be replaced than the engine controller board 200 (conversely, it is more likely that the engine controller board 200 is in the state at the time of shipment). In other words, it is considered that the engine position information 221D held by the engine controller board 200 is more likely to be the value at the time of shipment.

On the other hand, the main controller circuit 110 reads the main position information 121D from the main database 121 (step S102, YES), and does not read the engine position information 221D from the engine database 221 (step S103, NO). The case of "not reading the engine position information 221D" means, for example, that the engine position information 221D stored in the engine storage device 220 mounted on the engine controller board 200 is blank because the engine controller board 200 is already replaced. Alternatively, it is the case where the engine position information 221D cannot be read since the engine controller board 200 (or at least the engine storage device 220) is in a failure.

In this case (step S103, NO), the main controller circuit 110 configures frequency specified by the read main position information 121D based on the frequency database 122 for the wireless network communication module 130 (step S108). The main controller circuit 110 restores (recoveries) the engine position information 221D stored in the engine database 221 by storing the main position information 121D in the engine database 221 (step S109).

On the other hand, the main controller circuit 110 does not read the main position information 121D from the main database 121 (step S102, NO), and reads the engine position information 221D from the engine database 221 (step S110, YES). The case of "not reading the main position information 121D" means, for example, that the main position information 121D stored in the main storage device 120 mounted on the main controller board 100 is blank because the main controller board 100 is already replaced. Or, it is the case where the main position information 121D cannot be read because the main storage device 120 is in a failure.

In this case (step S110, YES), the main controller circuit 110 configures frequency specified by the read engine position information 221D based on the frequency database 122 for the wireless network communication module 130 (step S106). The main controller circuit 110 restores (recoveries) the main position information 121D stored in the main database 121 by storing the engine position information 221D in the main database 121 (step S107).

On the other hand, the main controller circuit 110 does not read the main position information 121D from the main database 121 (step S102, NO), and does not read the engine position information 221D from the engine database 221 (step S110, NO). In this case, the main controller circuit 110 configures frequency which can be used by world roaming for the wireless network communication module 130 (step S111).

The world roaming has such a limitation that available frequencies (channels) are limited, an active scanning is prohibited, etc. Therefore, it is desirable to restore (recover) the main position information 121D and the engine position information 221D as well as to configure frequency using the frequency database 122 based on the restored (recovered) values for the wireless network communication module 130. For example, the main controller circuit 110 may restore (recover) the main position information 121D and engine position information 221D based on GPS position information received using a GPS device (not shown). Alternatively, the main controller circuit 110 may notify a server device (not shown) for managing the image forming device 10 via the network N, and a service person may manually or remotely restore (recover) the main position information 121D and the engine position information 221D based on the notification.

### 6. Conclusion

It is necessary for a wireless network communication module to be configured for frequency corresponding to the country where a wireless communication device is installed. This is because a frequency band used by the wireless network communication module differs depending on the Radio Law of each country. It is concerned that the wireless communication device no longer store position information (it is blank) after parts are replaced due to failure or the like. In such a case, the wireless network communication module cannot configure frequency appropriately. As a result, it is concerned that it make the wireless communication impossible. Therefore, it is desirable to properly configure frequency for the wireless network communication module after parts of the wireless communication device are replaced due to failure or the like.
(1) Therefore, according to the present embodiment, If the main position information 121D and the engine position information 221D are different (step S104, YES), the main controller circuit 110 configures frequency specified by the engine position information 221D for the wireless network communication module 130 (step S106), and overwrite the main position information 121D stored in the main database 121 with the engine position information 221D (step S107). If the main position information 121D and the engine position information 221D are different (step S104, YES), the engine position information 221D is prioritized (steps S106, S107) since it is considered that it is highly probable that the main controller board 100 more likely to fail or to be replaced than the engine controller board 200 (conversely, it is more likely that the engine controller board 200 is in the state at the time of shipment). In other words, it is considered that the engine position information 221D held by the engine controller board 200 is more likely to be the value at the time of shipment. This allows appropriate frequency to be configured for the wireless network communication module 130 if the main position information 121D and the engine position information 221D differ (step S104, YES), by using the engine position information 221D which is more likely to be a correct value. In addition, by overwriting the main position information 121D stored in the main database 121 with the engine position information 221D (which is likely to be a correct value), at the next and subsequent time of starting, the main position information 121D and the engine position information 221D become an identical value. Therefore, it is possible to appropriately configure frequency for the wireless network communication module 130 at the next and subsequent time of starting.
(2) According to the present embodiment, the engine storage device 220 to store the engine position information 221D is mounted on the engine controller board 200 on which the engine controller circuit 210 to control the image forming unit 230 is mounted. Typically, the main storage device 120 mounted on the main controller board 100 stores position information to specify frequency to be configured for the wireless network communication module 130. In contrast, in the present embodiment, the engine storage device 220 of the engine controller board 200, which is less likely to fail or to be replaced than the main controller board 100, preliminarily stores the engine position information 221D. This allows appropriate frequency to be configured for the wireless network communication module 130 based on the engine position information 221D stored in the engine storage device 220 of the engine controller board 200 in the case where it is likely to fail or to be replaced than the main controller board 100.
(3) According to the present embodiment, if the main controller circuit 110 does not read the main position information 121D from the main database 121 (step S102, NO) as well as reads the engine position information 221D from the engine database 221 (step S110, YES), the main controller circuit 110 configures frequency specified by the engine position information 221D for the wireless network communication module 130 (step S106) and then stores the engine position information 221D in the main database 121 (step S107). Since the main controller board 100 is already replaced, this makes it possible to appropriately configure frequency for the wireless network communication module 130 based on the engine position information 221D, if the main position information 121D stored in the main storage device 120 mounted on the main controller board 100 is blank, or if the main position information 121D cannot be read because the main storage device 120 is in a failure. In addition, by storing the engine position information 221D in the main database 121, at the next and subsequent time of starting, the main position information 121D and the engine position information 221D come to have an identical value. Therefore, it is possible to appropriately configure frequency for the wireless network communication module 130 at the next and subsequent time of starting.
(4) According to the present embodiment, if the main controller circuit 110 reads the main position information 121D from the main database 121 (step S102, YES) as well as does not read the engine position information 221D from the engine database 221 (step S103, NO), the main controller circuit 110 configures frequency specified by the main position information 121D for the wireless network communication module 130 (step S108) and then stores the main position information 121D in the engine database 221 (step S109). Since the engine controller board 200 is already replaced, this makes it possible to appropriately configure frequency for the wireless network communication module 130 based on the main position information 121D, if the engine position information 221D stored in the engine storage device 220 mounted on the engine controller board 200 is blank, or if the engine position information 221D cannot be read because the engine controller board 200 (or at least the engine memory device 220) is in a failure. In addition, by storing the main position information 121D in the engine database 221, at the next and subsequent time of starting, the main position information 121D and the engine position information 221D come to have an identical value. Therefore, it is possible to appropriately configure frequency for the wireless network communication module 130 at the next and subsequent time of starting.
(5) According to the present embodiment, if the main position information 121D and the engine position information 221D are identical (step S104, NO), the main controller circuit 110 configures frequency specified by the main position information 121D (which is identical to the engine position information 221D) for the wireless network communication module 130 (step S105). If no failure, no parts replacements or the like occurs, it is supposed that the main position information 121D and the engine position information 221D are identical as they are at the time of shipment. However, frequency is specified based on the main position information 121D and the engine position information 221D (that is, by being double-checked), it is possible to appropriately configure frequency for the wireless network communication module 130.
(6) According to the present embodiment, if the main controller circuit 110 does not read the main position information 121D from the main database 121 (step S102, NO) as well as does not read the engine position information 221D from the engine database 221 (step S110, NO), the main controller circuit 110 configures frequency available by world roaming for the wireless network communication module 130 (step S111). This allows wireless network communication to be realized even when the main position information 121 and the engine position information 221D are not read. Also the world roaming has such limitations that available frequencies (channels) are limited, active scanning is prohibited, etc. By using the world roaming with limitations not all the time but exceptionally only when the main position information 121 and the engine position information 221D are not read, in principle, wireless network communication with less limitations can be realized.

Although each embodiment and each modification of the present art have been described above, the present art is not limited to only the above mentioned embodiments, and it should be noted that various changes can be made within a scope without departing from the gist of the present art.

## Claims

1. A wireless communication device (10) comprising:
a wireless network communication module (130);
a main controller board (100) including a main controller circuit (110) and a non-volatile main storage device (120) that has a main database (121) capable of storing main position information (121D) to specify frequency to be configured for the wireless network communication module (130); and
an engine controller board (200) that is physically independent of the main controller board (100) and includes an engine controller circuit (210) and a non-volatile engine storage device (220) that has an engine database (221) capable of storing engine position information (221D) to specify frequency to be configured for the wireless network communication module (130),
wherein if the main position information (121D) read from the main database (121) and the engine position information (221D) read from the engine database (221) differ, the main controller circuit (110) configures the frequency specified by the engine position information (221D) for the wireless network communication module (130), and overwrites the main position information (121D) stored in the main database (121) with the engine position information (221D).

2. The wireless communication device (10) according to claim 1 further comprising
an image forming unit (230),
wherein the engine storage device (220) to store the engine position information (221D) is mounted on the engine controller board (200) on which the engine controller circuit (210) to control the image forming unit (230) is mounted.

3. The wireless communication device (10) according to claim 1,
wherein the main controller circuit (110) configures the frequency specified by the engine position information (221D) for the wireless network communication module (130), and stores the engine position information (221D) in the main database (121) if the main controller circuit (110) does not read the main position information (121D) from the main database (121) as well as if the main controller circuit (110) reads the engine position information (221D) from the engine database (221).

4. The wireless communication device (10) according to claim 1,
wherein the main controller circuit (110) configures the frequency specified by the main position information for the wireless network communication module (130), and stores the main position information (121D) in the engine database (221) if the main controller circuit (110) reads the main position information (121D) from the main database (121) as well as if the main controller circuit (110) does not read the engine position information (221D) from the engine database (221).

5. The wireless communication device (10) according to claim 1,
wherein the main controller circuit (110) configures frequency specified by the main position information (121D) that is identical to the engine position information (221D) for the wireless network communication module (130) if the main position information (121D) read from the main database (121) and the engine position information read from the engine database (221) are identical.

6. The wireless communication device (10) according to claim 1,
wherein the main controller circuit (110) configures frequency that can be used by world roaming for the wireless network communication module (130) if the main controller circuit (110) does not read the main position information (121D) from the main database (121) as well as if the main controller circuit (110) does not read the engine position information (221D) from the engine database (221).

7. A non-transitory computer-readable storage medium which stores a wireless communication configuration program related to a wireless communication device (10),
the wireless communication device (10) comprising:
a wireless network communication module (130);
a main controller board (100) including a main controller circuit (110) and a non-volatile main storage device (120) that has a main database (121) capable of storing main position information (121D) to specify frequency to be configured for the wireless network communication module (130); and
an engine controller board (200) that is physically independent of the main controller board (100) and includes an engine controller circuit (210) and a non-volatile engine storage device (220) that has an engine database (221) capable of storing engine position information (221D) to specify frequency to be configured for the wireless network communication module (130),
the wireless communication configuration program causing the main controller circuit (110) to operate to configure the frequency specified by the engine position information (221D) for the wireless network communication module (130), and to overwrite the main position information (121D) stored in the main database (121) with the engine position information (221D) if the main position information (121D) read from the main database (121) and the engine position information (221D) read from the engine database (221) differ.

8. A wireless communication configuration method related to a wireless communication device (10) which comprises:
a wireless network communication module (130);
a main controller board (100) including a main controller circuit (110) and a non-volatile main storage device (120) that has a main database (121) capable of storing main position information (121D) to specify frequency to be configured for the wireless network communication module (130); and
an engine controller board (200) that is physically independent of the main controller board (100) and includes an engine controller circuit (210) and a non-volatile engine storage device (220) that has an engine database (221) capable of storing engine position information (221D) to specify frequency to be configured for the wireless network communication module (130),
the wireless communication configuration method causing the main controller circuit (110) to configure the frequency specified by the engine position information (221D) for the wireless network communication module (130), and to overwrite the main position information (121D) stored in the main database (121) with the engine position information (221D) if the main position information (121D) read from the main database (121) and the engine position information (221D) read from the engine database (221) differ.
